# EUROPÄISCHE PATENTSCHRIFT

(11) **EP 3 523 157 B1**
(45) Veröffentlichungstag und Bekanntmachung des Hinweises auf die Patenterteilung: **04.05.2022**
(21) Anmeldenummer: 17777044.3
(22) Anmeldetag: 28.09.2017
(51) Int. Cl.: B60N 2/20, B60N 2/235

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE AUTOMOBILE

(30) Priorität: 04.10.2016 DE 102016219143; 21.12.2016 DE 102016225834
(43) Veröffentlichungstag der Anmeldung: 14.08.2019
(73) Patentinhaber: KEIPER Seating Mechanisms Co., Ltd., Shanghai 201315 (CN)
(72) Erfinder: KOENIG, Michael, 67688 Rodenbach (DE); REISCHMANN, Martin, 66989 Hoehfroeschen (DE); RAU, Thomas, 67727 Lohnsfeld (DE); BERNHARDT, Frank, 55234 Eppelheim (DE); DUBOIS, Dirk, 66999 Hinterweidenthal (DE)
(74) Vertreter: Liedtke & Partner Patentanwälte
(86) Internationale Anmeldenummer: PCT/EP2017/074675
(87) Internationale Veröffentlichungsnummer: WO 2018/065297

(56) Entgegenhaltungen:
- EP-A2- 1 747 936
- WO-A1-2005/068249
- WO-A2-2007/028506

## Beschreibung

Die Erfindung betrifft einen Fahrzeugsitz, insbesondere Kraftfahrzeugsitz, mit einem ersten Strukturteil, einem zweiten Strukturteil und wenigstens einem verriegelbaren und entriegelbaren Beschlag, der Beschlag aufweisend ein erstes Beschlagteil, das wenigstens mittelbar mit dem ersten Strukturteil verbunden ist, und ein zweites Beschlagteil, das wenigstens mittelbar mit dem zweiten Strukturteil verbunden ist, wobei bei entriegeltem Beschlag eine Winkellage des zweiten Strukturteils relativ zu dem ersten Strukturteil um eine Achse veränderbar ist, wobei das erste Strukturteil eine Sitzteil-Struktur eines Sitzteils ist, und das zweite Strukturteil eine Rückenlehnen-Struktur einer Rückenlehne ist, und der Fahrzeugsitz eine zum Personentransport geeignete Gebrauchsstellung einnehmen kann, in der die Rückenlehne weitgehend aufrecht steht, und eine Nichtgebrauchsstellung einnehmen kann, in der die Rückenlehne gegenüber der Gebrauchsstellung um die Achse nach vorne geschwenkt ist.

### Stand der Technik

Aus der DE 103 34 220 A1 ist ein Rastbeschlag für einen Fahrzeugsitz bekannt, der Rastbeschlag aufweisend ein Beschlagunterteil, ein auf dem Beschlagunterteil drehbar gelagertes Beschlagoberteil und wenigstens ein in einer Führung des Beschlagunterteils geführtes Zahnsegment zum Verriegeln des Beschlagoberteils, wobei die Führung zugleich das Lager für das Beschlagoberteil bildet. Zwischen der Führung und dem Beschlagoberteil sind Abstandhalter aus einem Kunststoff vorgesehen. Mittels der Abstandhalter wird im Normalfall ein direkter Kontakt zwischen der Führung und dem Beschlagoberteil vermieden und eine unerwünschte Geräuschbildung im Lagersitz durch die Reibung einer gleichen Materialpaarung verhindert. Ein für eine leichtgängige Drehung des Beschlagoberteils notwendiges Spiel ist durch die Abstandhalter unabhängig von einer Winkellage zwischen dem Beschlagunterteil und dem Beschlagoberteil reduziert.

Die DE 10 2004 041 735 A1 offenbart einen Beschlag für einen Fahrzeugsitz, mit einem ersten Beschlagteil, einem zweiten Beschlagteil, das relativ zu dem ersten Beschlagteil um eine Achse schwenkbar ist, wenigstens einer Halteklammer zum axialen Zusammenhalt der Beschlagteile und wenigstens einem Gleiter zur Beseitigung eines Radialspiels zwischen den Beschlagteilen. Der Gleiter beseitigt in allen Winkellagen des zweiten Beschlagteils relativ zu dem ersten Beschlagteil das Radialspiel.

Bei einem aus der DE 10 2004 010 491 A1 bekannten Beschlag mit einem ersten Beschlagteil, einem auf dem ersten Beschlagteil gelagerten und relativ zu diesem um eine zentrale Achse drehbaren zweiten Beschlagteil und einem Umklammerungsring, welcher mit dem ersten Beschlagteil verbunden ist und das zweite Beschlagteil zum axialen Sichern übergreift, ist zwischen dem Umklammerungsring und dem zweiten Beschlagteil ein Zwischenring angeordnet. Der Zwischenring gleicht in allen Winkellagen des zweiten Beschlagteils relativ zu dem ersten Beschlagteil ein Radialspiel aus.

Einen ebenfalls in allen Winkellagen wirksamen, ein Radialspiel zwischen zwei Beschlagteilen eines Beschlags ausgleichenden, Zwischenring offenbart die DE 20 2005 013 733 U1.

Die DE 101 20 854 C1 offenbart einen Getriebebeschlag für eine Fahrzeugsitzeinstellvorrichtung mit einem ersten Hohlrad und einem relativ zu diesem drehbar gelagerten, axial dazu angeordneten zweiten Hohlrad als Zentralhohlräder und wenigstens einem axial zwischen den Hohlrädern angeordneten, mit beiden Hohlrädern in Eingriff stehenden, umlaufenden Planetenrad, wobei das zweite Hohlrad am ersten Hohlrad unter Zwischenlage einer wellenförmigen und/oder polygonartigen Lagerbuchse gelagert ist.

Die WO 2005/068249 A1 offenbart einen Fahrzeugsitz mit einem ersten Strukturteil, einem zweiten Strukturteil und einem verriegelbaren und entriegelbaren Beschlag, der Beschlag aufweisend ein erstes Beschlagteil, das mit dem ersten Strukturteil verbunden ist, und ein zweites Beschlagteil, das mit dem zweiten Strukturteil verbunden ist, wobei bei entriegeltem Beschlag eine Winkellage des zweiten Strukturteils relativ zu dem ersten Strukturteil um eine Achse veränderbar ist, wobei der Fahrzeugsitz eine zum Personentransport geeignete Gebrauchsstellung einnehmen kann, in der die Rückenlehne weitgehend aufrecht steht, und eine Nichtgebrauchsstellung einnehmen kann, in der die Rückenlehne gegenüber der Gebrauchsstellung um die Achse nach vorne geschwenkt ist.

### Aufgabe

Der Erfindung liegt die Aufgabe zu Grunde, einen Fahrzeugsitz der eingangs genannten Art zu verbessern, insbesondere eine Geräuschbildung aufgrund eines Radialspiels des Beschlags in einem nicht verriegelten Zustand zu vermeiden.

### Lösung

Diese Aufgabe wird erfindungsgemäß gelöst durch einen Fahrzeugsitz, insbesondere Kraftfahrzeugsitz, mit einem ersten Strukturteil, einem zweiten Strukturteil und wenigstens einem verriegelbaren und entriegelbaren Beschlag, der Beschlag aufweisend ein erstes Beschlagteil, das wenigstens mittelbar mit dem ersten Strukturteil verbunden ist, und ein zweites Beschlagteil, das wenigstens mittelbar mit dem zweiten Strukturteil verbunden ist, wobei bei entriegeltem Beschlag eine Winkellage des zweiten Strukturteils relativ zu dem ersten Strukturteil um eine Achse veränderbar ist, wobei das erste Strukturteil eine Sitzteil-Struktur eines Sitzteils ist, und das zweite Strukturteil eine Rückenlehnen-Struktur einer Rückenlehne ist, und der Fahrzeugsitz eine zum Personentransport geeignete Gebrauchsstellung einnehmen kann, in der die Rückenlehne weitgehend aufrecht steht, und eine Nichtgebrauchsstellung einnehmen kann, in der die Rückenlehne gegenüber der Gebrauchsstellung um die Achse nach vorne geschwenkt ist, wobei in wenigstens einer Winkellage des zweiten Strukturteils relativ zu dem ersten Strukturteil ein Federelement das erste Beschlagteil und das zweite Beschlagteil in radialer Richtung gegeneinander verspannt, und in wenigstens einer weiteren Winkellage des zweiten Strukturteils relativ zu dem ersten Strukturteil das Federelement ohne Wirkung auf den Beschlag ist. Das Federelement ist in wenigstens einer weiteren Winkellage ohne Wirkung auf den Beschlag, damit das Federelement über definierte Winkelbereiche eine reibungsarme Verstellung des Beschlags ermöglicht, wobei das Federelement in der Gebrauchsstellung ohne Wirkung auf den Beschlag ist, und das Federelement in der Nichtgebrauchsstellung das erste Beschlagteil und das zweite Beschlagteil in radialer Richtung gegeneinander verspannt.

Dadurch, dass ein Federelement in wenigstens einer Winkellage des zweiten Strukturteils relativ zu dem ersten Strukturteil, das erste Beschlagteil und das zweite Beschlagteil in radialer Richtung gegeneinander verspannt, ist in dieser Winkellage eine Geräuschbildung aufgrund eines Radialspiels des Beschlags in einem nicht verriegelten Zustand vermieden. Der Beschlag ist vorzugsweise als ein Rastbeschlag ausgebildet, dessen grundsätzliche Funktionsweise beispielsweise in der WO 2014/053400 A1 beschrieben ist.

Das erste Strukturteil ist eine Sitzteil-Struktur eines Sitzteils, und das zweite Strukturteil eine Rückenlehnen-Struktur einer Rückenlehne, wobei der Beschlag zur Neigungseinstellung der Rückenlehne dient. Vorzugsweise weist der Fahrzeugsitz zwei Beschläge auf, nämlich auf jeder Sitzseite einen Beschlag.

Das erste Beschlagteil kann mittels eines ersten Adapters mit der Sitzteil-Struktur verbunden sein. Es ist jedoch auch eine unmittelbare Anbindung des ersten Beschlagteils an die Sitzteil-Struktur möglich. Das zweite Beschlagteil kann mittels eines zweiten Adapters mit der Rückenlehnen-Struktur verbunden sein. Es ist jedoch auch eine unmittelbare Anbindung des zweiten Beschlagteils an die Rückenlehnen-Struktur möglich.

Der Fahrzeugsitz kann wenigstens eine zum Personentransport geeignete Gebrauchsstellung einnehmen, in der die Rückenlehne weitgehend aufrecht steht. Zur Komfortverbesserung kann der Fahrzeugsitz innerhalb eines Einstellbereichs mehrere Gebrauchsstellungen einnehmen, insbesondere in zueinander gestuften Winkellagen. Der wenigstens eine Beschlag ist in der wenigstens einen Gebrauchsstellung, und gegebenenfalls weiteren Gebrauchsstellungen, während des normalen Gebrauchs des Fahrzeugsitzes zum Personentransport verriegelt.

Der Fahrzeugsitz kann eine Nichtgebrauchsstellung einnehmen, in der die Rückenlehne gegenüber der Gebrauchsstellung um die Achse nach vorne geschwenkt ist. In der Nichtgebrauchsstellung ist die Rückenlehne vorzugsweise in eine weitgehend horizontale Stellung geschwenkt. Die Rückseite der Rückenlehne kann in der Nichtgebrauchsstellung als Ladeboden dienen. Der Beschlag ist in der Nichtgebrauchsstellung vorzugsweise nicht verriegelt. In der Nichtgebrauchsstellung kann die Rückenlehne mit einem Lehnenpolster auf einem Sitzteilpolster des Sitzteils aufliegen.

Das Federelement ist in der Gebrauchsstellung ohne Wirkung auf den Beschlag, damit das Federelement eine reibungsarme Verstellung der Neigung der Rückenlehne zwischen mehreren Gebrauchsstellungen ermöglicht. Das Federelement verspannt in der Nichtgebrauchsstellung das erstes Beschlagteil und das zweite Beschlagteil in radialer Richtung gegeneinander. Das Federelement kann in einer zwischen der Gebrauchsstellung und der Nichtgebrauchsstellung liegenden Zwischenstellung das erstes Beschlagteil und das zweite Beschlagteil in radialer Richtung gegeneinander verspannen. Das Federelement ist vorzugsweise keilförmig. Das Federelement wirkt vorzugsweise in radialer Richtung wie ein Keil zwischen den beiden Beschlagteilen. Das Federelement kann eine in Umfangsrichtung keilförmig verlaufende Anlaufschräge aufweisen.

Das Federelement kann an einem der beiden Beschlagteile in radialer Richtung abgestützt sein. Das Federelement kann ortsfest zu diesem einen der beiden Beschlagteile befestigt sein. Ein Finger kann das Federelement in der wenigstens einen Winkellage des zweiten Strukturteils relativ zu dem ersten Strukturteil in radialer Richtung verspannen. Der Finger kann mit dem anderen der beiden Beschlagteile um die Achse mitschwenken. Vorzugsweise ist der Finger an einer Rückenlehnenstruktur oder einem mit der Rückenlehnenstruktur verbundenen Adapter befestigt. Eine radial nach innen weisende Innenfläche des Fingers kann in Umfangsrichtung mit einem Radius um die Lehnenschwenkachse gekrümmt sein.

Der Finger kann beim Einnehmen wenigstens einer Winkellage auf einen Flansch des Federelements auflaufen. Der Flansch kann mindestens einen Flanschabschnitt aufweisen, der radial weiter außen angeordnet ist als eine radial nach innen weisende Fläche des Fingers.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Seitenansicht eines Fahrzeugsitzes, wobei eine Rückenlehne des Fahrzeugsitzes in einer von mehreren Gebrauchsstellungen, einer Nichtgebrauchsstellung und zwei zwischen der Gebrauchsstellung und der Nichtgebrauchsstellung gelegenen Zwischenstellungen dargestellt ist,
- Fig. 2:: eine perspektivische Ansicht auf eine Anordnung mit einem Beschlag, einem ersten Adapter, einem zweiten Adapter und einem Federelement eines erfindungsgemäßen Fahrzeugsitzes gemäß eines ersten Ausführungsbeispiels,
- Fig. 3:: einen Schnitt durch die Anordnung aus Fig. 2 entlang der Linie III - III in Fig. 2,
- Fig. 4:: eine Seitenansicht eines Federelements,
- Fig. 5:: eine perspektivische Ansicht des Federelements aus Fig. 4,
- Fig. 6:: ausschnittweise eine Seitenansicht auf die Anordnung aus Fig. 2, wobei sich die Rückenlehne in einer Gebrauchsstellung befindet,
- Fig. 7:: eine Fig. 6 entsprechende Seitenansicht, wobei sich die Rückenlehne in einer ersten Zwischenstellung befindet,
- Fig. 8:: eine Fig. 6 entsprechende Seitenansicht, wobei sich die Rückenlehne in einer zweiten Zwischenstellung befindet,
- Fig. 9:: eine Fig. 6 entsprechende Seitenansicht, wobei sich die Rückenlehne in einer Nichtgebrauchsstellung befindet,
- Fig. 10:: ausschnittweise eine Seitenansicht auf einen erfindungsgemäßen Fahrzeugsitz gemäß einer Abwandlung des ersten Ausführungsbeispiels, wobei sich die Rückenlehne in einer Nichtgebrauchsstellung befindet,
- Fig. 11:: eine perspektivische Ansicht eines Federelements eines erfindungsgemäßen Fahrzeugsitzes gemäß eines zweiten Ausführungsbeispiels, und
- Fig. 12:: einen Schnitt durch das Federelement aus Fig. 11 entlang der Linie XI - XI in Fig. 11.

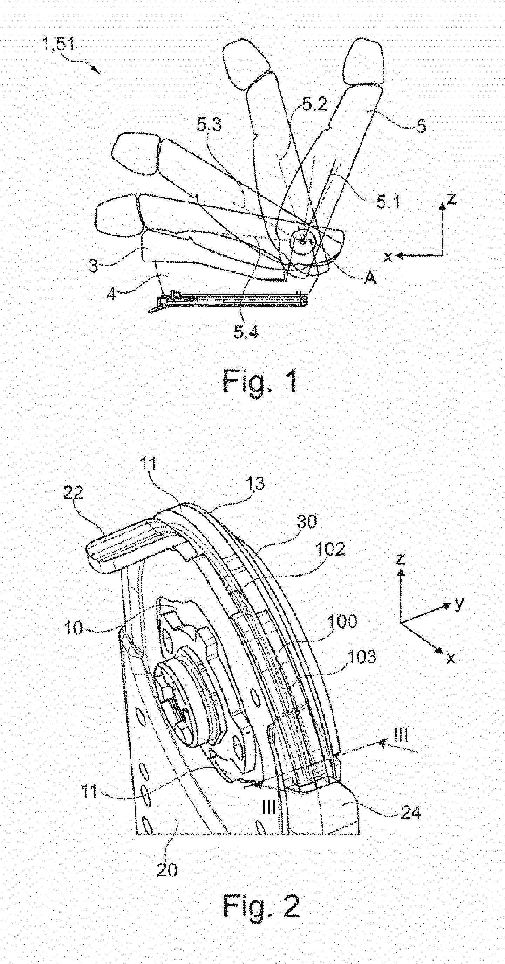

Der in Figur 1 schematisch dargestellte Fahrzeugsitz 1, 51, insbesondere für ein Kraftfahrzeug, wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1, 51 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1, 51 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1, 51 sitzenden Insassen in normaler Sitzposition, wobei der Fahrzeugsitz 1, 51 im Fahrzeug eingebaut, in einer zur Personenbeförderung geeigneten Gebrauchsstellung und wie üblich in Fahrtrichtung ausgerichtet ist. Der erfindungsgemäße Fahrzeugsitz 1, 51 kann jedoch auch in abweichender Ausrichtung, beispielsweise quer zur Fahrtrichtung verbaut werden.

Figur 1 zeigt eine schematische Seitenansicht des Fahrzeugsitzes 1, 51, wobei die Rückenlehne 5 in einer Gebrauchsstellung 5.1, einer Nichtgebrauchsstellung 5.4 und zwei zwischen der Gebrauchsstellung 5.1 und der Nichtgebrauchsstellung 5.4 gelegenen Zwischenstellungen 5.2, 5.3 dargestellt ist. In der Gebrauchsstellung 5.1 ist die Rückenlehne 5 gegenüber der Vertikalrichtung z leicht nach hinten geneigt. Die Gebrauchsstellung der Rückenlehne 5 dient insbesondere dem Personentransport. In der Nichtgebrauchsstellung 5.4 ist die Rückenlehne 5 um eine parallel zur Querrichtung y verlaufende Achse A, nachfolgend auch als Lehnenschwenkachse A bezeichnet, so weit nach vorne geschwenkt, dass die Rückenlehne 5 weitgehend horizontal angeordnet ist, und auf dem Sitzteil 3 aufliegt. In der Nichtgebrauchsstellung 5.4 kann die Rückseite der Rückenlehne 5 als Ladefläche dienen.

Der Fahrzeugsitz 1, 51 weist ein Sitzteil 3 und eine relativ zum Sitzteil 3 in ihrer Neigung einstellbare Rückenlehne 5 auf. Zur Entriegelung und Neigungseinstellung der Rückenlehne 5 wird vorzugsweise manuell, beispielsweise mittels eines in den Figuren nicht dargestellten Bedienhebels, eine Übertragungsstange gedreht, welche horizontal im Übergangsbereich zwischen dem Sitzteil 3 und Rückenlehne 5 parallel zur Querrichtung y angeordnet ist. Auf beiden Seiten des Fahrzeugsitzes 1, 51 greift die Übertragungsstange in jeweils einen Beschlag 10 ein. Die Übertragungsstange fluchtet mit der Lehnenschwenkachse A.

Der Beschlag 10 ist vorliegend als ein Rastbeschlag ausgebildet, dessen grundsätzliche Funktionsweise beispielsweise in der WO 2014/053400 A1 beschrieben ist.

Der Beschlag 10 weist ein erstes Beschlagteil 11 und ein zweites Beschlagteil 12 auf, welche relativ zueinander um die Lehnenschwenkachse A verdrehbar sind. Die Lehnenschwenkachse A fluchtet vorliegend mit der Mittelachse der Übertragungsstange. Auf die Lehnenschwenkachse A sind die nachfolgend verwendeten Begriffe radial und Umfangsrichtung bezogen. Die beiden Beschlagteile 11, 12 lassen sich jeweils näherungsweise in eine kreisrunde Scheibenform einbeschreiben. Zur Aufnahme von axial wirkenden Kräften, also zum axialen Zusammenhalt der Beschlagteile 11, 12, ist ein Umklammerungsring 13 vorgesehen.

Der Umklammerungsring 13 ist fest mit einem der beiden Beschlagteile 11, 12 verbunden, vorliegend in einem äußeren Ringabschnitt mit dem ersten Beschlagteil 11, beispielsweise mittels Laserschweißens. Mittels eines inneren Ringabschnittes, welcher in einer zur Lehnenschwenkachse A senkrechten Ebene angeordnet ist, übergreift der Umklammerungsring 13, gegebenenfalls unter Zwischenlage eines Gleitrings, das zweite Beschlagteil 12 in dessen radial äußerem Randbereich, ohne die Relativbewegung der beiden Beschlagteile 11, 12 zu behindern. Der Umklammerungsring 13 und das mit ihm fest verbundene erste Beschlagteil 11 umklammern also das relativ zu ihnen bewegliche zweite Beschlagteil 12. In baulicher Hinsicht bilden die beiden Beschlagteile 11, 12 zusammen mit dem Umklammerungsring 13 eine scheibenförmige Einheit.

Das erste Beschlagteil 11 ist mittels eines ersten Adapters 20 fest mit einer tragenden Sitzteilstruktur 4 des Sitzteils 3 verbunden, also sitzteilfest. Das zweite Beschlagteil 12 ist mittels eines zweiten Adapters 30 fest mit einer tragenden Rückenlehnen-Struktur 6 der Rückenlehne 5 verbunden, also lehnenfest. Die Zuordnungen der Beschlagteile 11, 12 können jedoch auch vertauscht sein, d.h. das erste Beschlagteil 11 ist in diesem Fall lehnenfest und das zweite Beschlagteil 12 sitzteilfest.

Der Beschlag 10 liegt im Kraftfluss zwischen der Rückenlehne 5 und dem Sitzteil 3. Der erste Adapter 20 weist vorliegend eine Federstützlasche 22 zur Steuerung einer in den Figuren nicht dargestellte Spiralfeder zur Kompensation einer auf die Rückenlehne 5 wirkenden Gewichtskraft auf. Diese Spiralfeder wirkt zudem auf einen Finger 32, der in Querrichtung y von dem zweiten Adapter 30 in Richtung des ersten Adapters 20 absteht. Der Finger 32 ist vorliegend eine einteilig mit dem zweiten Adapter 30 ausgebildete Blechlasche. Eine radial nach innen weisende Innenfläche des Fingers 32 ist in Umfangsrichtung mit einem Radius R um die Lehnenschwenkachse A gekrümmt.

Das erste Beschlagteil 11 weist vorliegend vier Führungssegmente auf, welche mit geraden Führungsflächen paarweise jeweils einen Riegel seitlich in radialer Richtung führen. Die vorliegend insgesamt vier Riegel sind um je 90° versetzt zueinander in einem zwischen den beiden Beschlagteilen 11, 12 definierten Bauraum angeordnet. Die Riegel sind an ihrem radial außen liegenden Ende mit einer Verzahnung versehen, die mit einem Zahnkranz des als Hohlrad ausgebildeten zweiten Beschlagteils 12 in Eingriff bringbar sind. Wenn der Zahnkranz und die Riegel zusammenwirken, ist der Beschlag 10 verriegelt.

Das zweite Beschlagteil 12 ist in einer Vertiefung des ersten Beschlagteils 11 angeordnet und wird durch dieses radial außen übergriffen, wodurch die beiden Beschlagteile 11, 12 einander lagern. Das zweite Beschlagteil 12 kann im ersten Beschlagteil 11 gelagert sein. Die Verhältnisse könnten aber genau umgekehrt sein, d.h. das erste Beschlagteil 11 kann auf dem zweiten Beschlagteil 12 gelagert sein. Grundsätzlich sind beide Anordnungen gleichwertig.

In der Gebrauchsstellung 5.1 der Rückenlehne 5 befindet sich der Beschlag 10 in einem verriegelten Zustand. Im verriegelten Zustand sind die Beschlagteile 11, 12 in radialer Richtung weitgehend spielfrei miteinander verriegelt. In der Nichtgebrauchsstellung 5.4 der Rückenlehne 5 befindet sich der Beschlag 10 vorzugsweise in einem nichtverriegelten Zustand. In dem nichtverriegelten Zustand weist der Beschlag 10 ein Radialspiel auf, um eine leichtgängige Einstellung des Beschlags 10 zu gewährleisten. Aufgrund des Radialspiels können das erste Beschlagteil 11 und das zweite Beschlagteil 12 in einem unverriegelten Zustand des Beschlags 10 in radialer Richtung geringfügig gegeneinander bewegt werden, was im Fahrbetrieb des Fahrzeugs zu einer unerwünschten Geräuschbildung führen kann.

Die nachfolgend beschriebene Anordnung eines Federelements 100 gemäß eines ersten Ausführungsbeispiels des Fahrzeugsitzes 1 beseitigt das Radialspiel des Beschlags 10 in der Nichtgebrauchsstellung 5.4 der Rückenlehne 5.

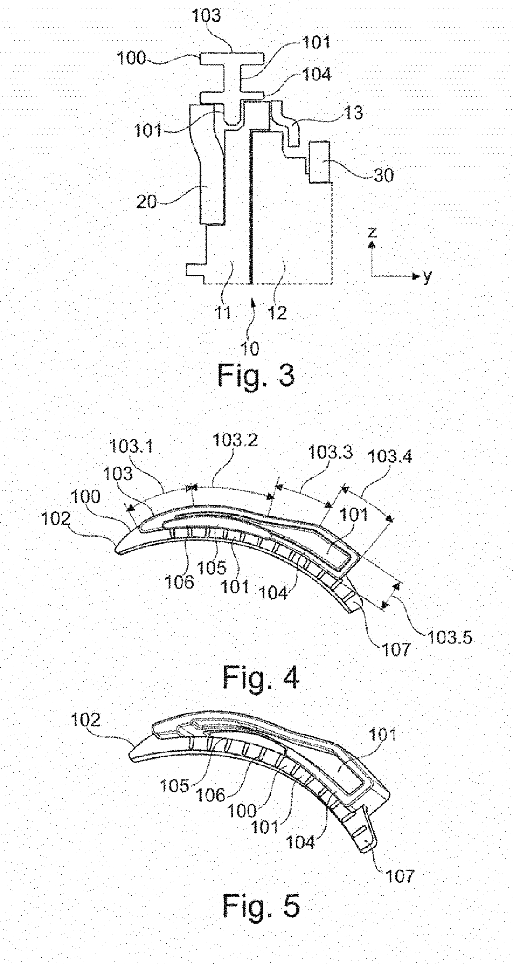

Die Figuren 2 und 3 zeigen die Anordnung des Federelements 100 an dem Beschlag 10. Die Figuren 4 und 5 zeigen das Federelement 100 als Einzelteil.

Das Federelement 100 ist um die Lehnenschwenkachse A gekrümmt, wobei einzelne Geometrien von einer Kreisbogenform um die Lehnenschwenkachse A abweichen. Das Federelement 100 weist einen Steg 101 auf, der sich, bezogen auf die Lehnenschwenkachse A, in Umfangsrichtung und senkrecht zur Lehnenschwenkachse A erstreckt. In einem dem Finger 32 zugewandten Endbereich des Stegs 101 weist der Steg 101 eine Anlaufschräge 102 auf. Die Anlaufschräge 102 verläuft in Umfangsrichtung keilförmig. In Umfangsrichtung schließt an die Anlaufschräge 102 ein Flansch 103 an, der abschnittsweise eine radial äußere Kontur des Federelements 100 bildet. Der Flansch 103 steht in Querrichtung y beidseitig über den Steg 101 über. Der Steg 101 ist in Querrichtung y mittig zum Flansch 103 angeordnet. Der Finger 32 des zweiten Adapters 30 ragt in Querrichtung y betrachtet über den Flansch 103 hinaus.

In Umfangsrichtung setzt der Flansch 103 in einem ersten Flanschabschnitt 103.1 die radiale Steigung der Anlaufschräge 102 zunächst fort. Im weiteren Verlauf bleibt der Flansch 103 in einem zweiten Flanschabschnitt 103.2 annähernd äquidistant zur Lehnenschwenkachse A. Ein Radius der äußeren Fläche des zweiten Flanschabschnitts 103.2 ist geringfügig größer als der Radius R der Innenfläche des Fingers 32. In einem an den zweiten Flanschabschnitt 103.2 anschließenden dritten Flanschabschnitt 103.3 nimmt der Abstand des Flansches 103 zur Lehnenschwenkachse A nochmals zu. In einem an den dritten Flanschabschnitt 103.3 anschließenden vierten Flanschabschnitt 103.4 bleibt der Abstand des Flansches 103 zur Lehnenschwenkachse A wieder annähernd äquidistant. Ein fünfter Flanschabschnitt 103.5 verläuft radial nach innen und geht dann in einen inneren Flansch 104 über.

Der innere Flansch 104 steht in Querrichtung y beidseitig über den Steg 101 über. Der Steg 101 ist in Querrichtung y mittig zum inneren Flansch 104 angeordnet. Der innere Flansch 104 erstreckt sich in Umfangsrichtung entlang des dritten Flanschabschnitts 103.3 und des vierten Flanschabschnitts 103.4. Der innere Flansch 104 verläuft weitgehend äquidistant zur Lehnenschwenkachse A. Der Steg 101 ist einerseits radial weiter innen als der innere Flansch 104, andererseits verbindet der Steg 101 den inneren Flansch 104 mit dem Flansch 103. Der Steg 101 weist radial unterhalb des ersten Flanschabschnitts 103.1 und des zweiten Flanschabschnitts 103.2 eine längliche Öffnung 105 auf. Die Öffnung 105 bewirkt eine höhere Nachgiebigkeit des ersten Flanschabschnitts 103.1 und des zweiten Flanschabschnitts 103.2 radial nach innen, als es ohne die Öffnung 105 der Fall wäre. Dadurch bildet der erste Flanschabschnitts 103.1 und der zweite Flanschabschnitt 103.2 einen elastisch radial nach innen federnden Bereich des Federelements 100.

Der Steg 101 bildet an seinem von der Anlaufschräge 102 abgewandten Ende eine Nase 107, die in Umfangsrichtung über den fünften Flanschabschnitt 103.5 hinausragt. Der Steg 101 weist über den Umfang verteilt mehrere in radialer Richtung ausgerichtete Rippen 106 auf, vorzugsweise auf beiden Seiten des Stegs 101.

Das Federelement 100 ist am Beschlag 10 befestigt. Dazu ist der radial nach innen weisende Bereich des Stegs 101 in einen Spalt zwischen dem ersten Beschlagteil 11 und dem ersten Adapter 20 eingeschoben. Die Nase 107 greift unter einen in Querrichtung y verlaufenden, umgestellten Rand 24 ersten Adapters 20. In Umfangsrichtung liegt der fünfte Flanschabschnitt 103.5 zudem an einer Stirnfläche des Randes 24 an.

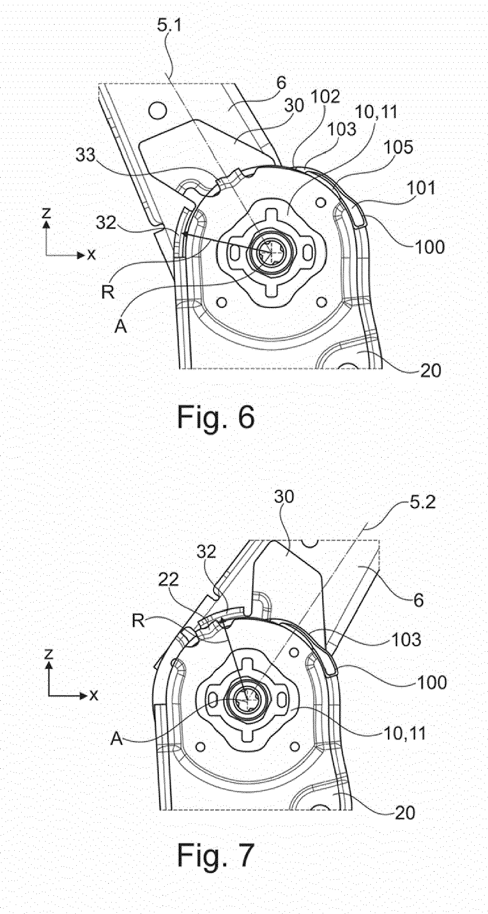

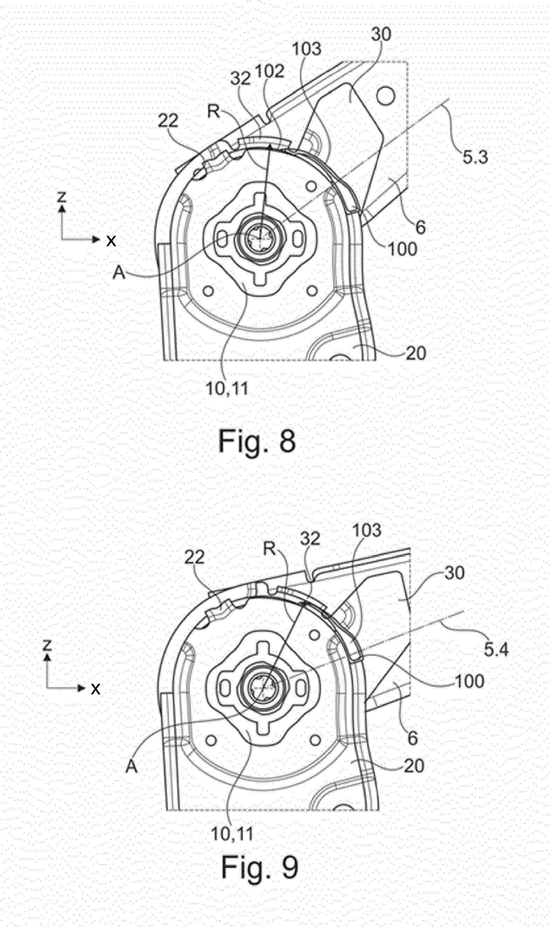

Die Funktionsweise des Federelements 100 ist in den Figuren 6 bis 9 ersichtlich. Figur 6 zeigt die Rückenlehnen-Struktur 6 in der Gebrauchsstellung 5.1. Der Finger 32 ist in der Gebrauchsstellung 5.1 in Umfangsrichtung von dem Federelement 100 beabstandet. Auch in der in Figur 7 dargestellten ersten Zwischenstellung 5.2 ist der mit der Rückenlehnen-Struktur 6 mitschwenkende Finger 32 in Umfangsrichtung noch von dem Federelement 100 beabstandet. In der zweiten Zwischenstellung 5.3 hat eine in Umfangsrichtung voreilende Kante des Fingers 32 die Anlaufschräge 102 erreicht und läuft bei weiterem Schwenken der Rückenlehnen-Struktur 6 um die Lehnenschwenkachse A auf den ersten Flanschabschnitt 103.1 auf. Figur 9 zeigt die Nichtgebrauchsstellung 5.4, in der der Finger 32 den ersten Flanschabschnitt 103.1 überdeckt und teilweise den zweiten Flanschabschnitt 103.2 überlappt. Dadurch, dass der zweite Flanschabschnitt 103.2 radial weiter außen liegt als die radial nach innen weisende Innenfläche des Fingers 32, die mit dem Radius R um die Lehnenschwenkachse A gekrümmt ist, ist das Federelement 100 durch den Finger 32 in radialer Richtung komprimiert und verspannt. Durch eine resultierende radiale wirkende Federkraft des Federelements 100 ist der Finger 32, und dadurch das mit dem Finger 32 über den zweiten Adapter 30 fest verbundene zweite Beschlagteil 12, in radialer Richtung gegenüber dem ersten Beschlagteil 11, auf dem sich das Federelement 100 über den inneren Flansch 104 abstützt, vorgespannt. Das Federelement 100 übt eine Keilwirkung zwischen den beiden Beschlagteilen 11, 12 aus. Aufgrund der radialen Vorspannung zwischen dem ersten Beschlagteil 11 und dem zweiten Beschlagteil 12 ist eine Geräuschbildung des in der Nichtgebrauchsstellung 5.4 nicht verriegelten Beschlags 10 vermieden.

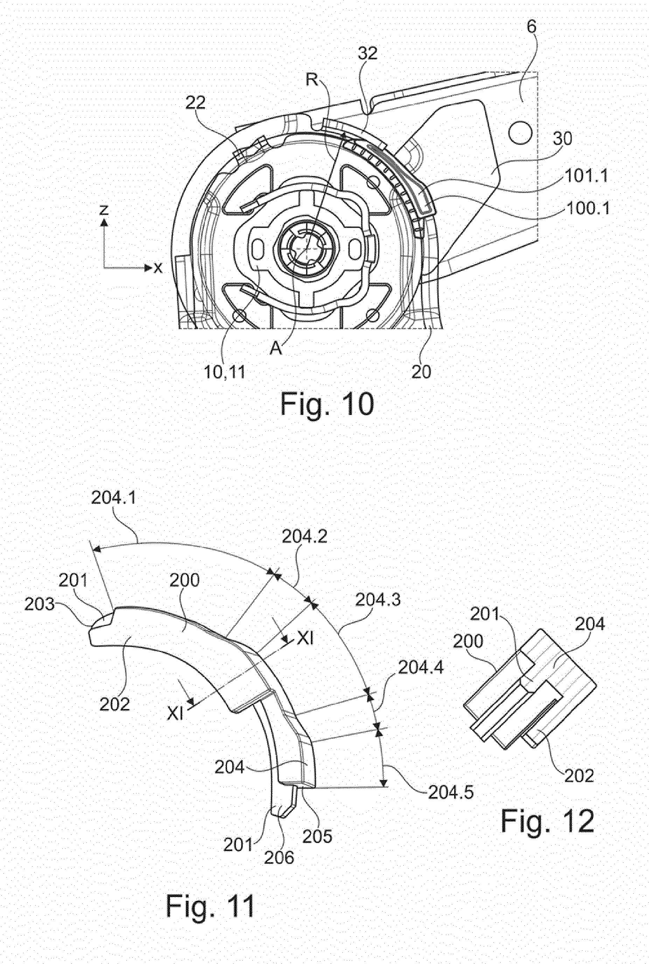

Figur 10 zeigt eine Abwandlung des ersten Ausführungsbeispiels, die sich vom ersten Ausführungsbeispiel lediglich dadurch unterscheidet, dass bei einem Federelement 100.1 der Steg 101.1 ungeöffnet ist, das heißt keine der zuvor beschriebenen Öffnung 105 entsprechende Öffnung vorhanden ist. Um dennoch gute Federeigenschaften des Federelements 100.1 zu erreichen, ist das Federelement 100.1 vorzugsweise aus einem vergleichsweise nachgiebigen Werkstoff gefertigt.

Die Figuren 11 und 12 zeigen ein Federelement 200 eines zweiten Ausführungsbeispiels eines erfindungsgemäßen Fahrzeugsitzes 51. Bis auf das Federelement 200 entspricht der Fahrzeugsitz 51 hinsichtlich der Funktion und des Aufbaus dem Fahrzeugsitz 1 des ersten Ausführungsbeispiels, dessen Beschreibung somit mit Ausnahme der nachfolgend beschriebenen abweichenden Details, auch für den Fahrzeugsitz 51 des zweiten Ausführungsbeispiels gilt. Insofern zeigt Fig.1 schematisch sowohl den Fahrzeugsitz 1 des ersten Ausführungsbeispiels als auch den Fahrzeugsitz 51 des zweiten Ausführungsbeispiels.

Das Federelement 200 ist um die Lehnenschwenkachse A gekrümmt, wobei einzelne Geometrien von einer Kreisbogenform um die Lehnenschwenkachse A abweichen. Das Federelement 200 weist einen ersten Steg 201 und einen zweiten Steg 202 auf, die sich beide bezogen auf die Lehnenschwenkachse A in Umfangsrichtung und senkrecht zur Lehnenschwenkachse A erstrecken. Die beiden Stege 201, 202 sind in axialer Richtung zueinander beabstandet angeordnet. Der zweite Steg 202 ist in Umfangsrichtung kürzer als der erste Steg 201. In einem dem Finger 32 zugewandten Endbereich des ersten Stegs 201 weist der erste Steg 201 eine Anlaufschräge 203 auf.

An die Anlaufschräge 203 schließt in Umfangsrichtung ein Flansch 204 an, der abschnittsweise eine radial äußere Kontur des Federelements 200 bildet. Der Flansch 204 ist in axialer Richtung einerseits durch den zweiten Steg 202 begrenzt, andererseits steht der Flansch 204 über etwa die Hälfte seiner Länge seitlich über den ersten Steg 201 über. Über etwa die zweite Hälfte seiner Länge ist der Flansch 204 in axialer Richtung durch den ersten Steg 201 begrenzt.

In Umfangsrichtung hat der Flansch 204 einen ersten Flanschabschnitt 204.1, der annähernd äquidistant zur Lehnenschwenkachse A verläuft. Ein Radius der äußeren Fläche des ersten Flanschabschnitts 204.1 ist geringfügig kleiner als der Radius R der Innenfläche des Fingers 32. An den ersten Flanschabschnitts 204.1 schließt in Umfangsrichtung ein zweiter Flanschabschnitt 204.2 an. Der zweite Flanschabschnitt 204.2 weist eine Steigung in radialer Richtung auf. Dabei ragt ein von dem Finger 32 abgewandter Endbereich des zweiten Flanschabschnitts 204.2 radial über den Radius R hinaus. Im weiteren Verlauf bleibt der Flansch 204 in einem dritten Flanschabschnitt 204.3 annähernd äquidistant zur Lehnenschwenkachse A. Ein Radius der äußeren Fläche des dritten Flanschabschnitts 204.3 ist geringfügig größer als der Radius R der Innenfläche des Fingers 32. An den dritten Flanschabschnitt 204.3 anschließend nimmt in einem vierten Flanschabschnitt 204.4 der Abstand zur Lehnenschwenkachse A nochmals zu. In einem an den vierten Flanschabschnitt 204.4 anschließenden fünften Flanschabschnitt 204.5 bleibt der Abstand zur Lehnenschwenkachse A wieder annähernd äquidistant. Am Ende des fünften Flanschabschnitts 204.5 verläuft eine Stirnfläche 205 radial nach innen.

Der erste Steg 201 bildet an seinem von der Anlaufschräge 203 abgewandten Ende eine Nase 206, die in Umfangsrichtung über den fünften Flanschabschnitt 204.5 hinausragt.

Das Federelement 200 ist am Beschlag 10 befestigt. Dazu wird in einem montierten Zustand des Federelements 200 zwischen den beiden Stegen 201, 202 eine umlaufende Stufe des zweiten Beschlagteils 12 10 aufgenommen. Dadurch ist das Federelement 200 in Querrichtung y fixiert. Die Nase 206 greift unter einen in Querrichtung y verlaufenden, umgestellten Rand 24 des ersten Adapters 20. In Umfangsrichtung liegt die Stirnfläche 205 zudem an einer Stirnfläche des Randes 24 an.

Die Funktionsweise des Federelements 200 ist analog zur Beschreibung der Figuren 6 bis 9, wobei in der Nichtgebrauchsstellung 5.4 das Federelement 200 von dem Finger 32 in dem zweiten Flanschabschnitt 204.2 in radialer Richtung komprimiert und verspannbar ist.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1, 51: Fahrzeugsitz
- 3: Sitzteil
- 4: erstes Strukturteil, Sitzteil-Struktur
- 5: Rückenlehne
- 5.1: Gebrauchsstellung
- 5.2: Zwischenstellung
- 5.3: Zwischenstellung
- 5.4: Nichtgebrauchsstellung
- 6: zweites Strukturteil, Rückenlehnen-Struktur
- 10: Beschlag
- 11: erstes Beschlagteil
- 12: zweites Beschlagteil
- 13: Umklammerungsring
- 20: erster Adapter
- 22: Federstützlasche
- 24: Rand
- 30: zweiter Adapter
- 32: Finger
- 100, 100.1: Federelement
- 101, 101.1: Steg
- 102: Anlaufschräge
- 103: Flansch
- 103.1: erster Flanschabschnitt
- 103.2: zweiter Flanschabschnitt
- 103.3: dritter Flanschabschnitt
- 103.4: vierter Flanschabschnitt
- 103.5: fünfter Flanschabschnitt
- 104: innerer Flansch
- 105: Öffnung
- 106: Rippe
- 107: Nase
- 200: Federelement
- 201: erster Steg
- 202: zweiter Steg
- 203: Anlaufschräge
- 204: Flansch
- 204.1: erster Flanschabschnitt
- 204.2: zweiter Flanschabschnitt
- 204.3: dritter Flanschabschnitt
- 204.4: vierter Flanschabschnitt
- 204.5: fünfter Flanschabschnitt
- 205: Stirnfläche
- 206: Nase
- A: Achse, Lehnenschwenkachse
- R: Radius (des Fingers 32)
- x: Längsrichtung
- y: Querrichtung
- z: Vertikalrichtung

## Patentansprüche

1. Fahrzeugsitz (1, 51), insbesondere Kraftfahrzeugsitz, mit einem ersten Strukturteil (4), einem zweiten Strukturteil (6) und wenigstens einem verriegelbaren und entriegelbaren Beschlag (10), der Beschlag (10) aufweisend ein erstes Beschlagteil (11), das wenigstens mittelbar mit dem ersten Strukturteil (4) verbunden ist, und ein zweites Beschlagteil (12), das wenigstens mittelbar mit dem zweiten Strukturteil (6) verbunden ist, wobei bei entriegeltem Beschlag (10) eine Winkellage des zweiten Strukturteils (6) relativ zu dem ersten Strukturteil (4) um eine Achse (A) veränderbar ist, wobei das erste Strukturteil eine Sitzteil-Struktur (4) eines Sitzteils (3) ist, und das zweite Strukturteil eine Rückenlehnen-Struktur (6) einer Rückenlehne (5) ist und der Fahrzeugsitz (1, 51) eine zum Personentransport geeignete Gebrauchsstellung (5.1) einnehmen kann, in der die Rückenlehne (5) weitgehend aufrecht steht, und eine Nichtgebrauchsstellung (5.4) einnehmen kann, in der die Rückenlehne (5) gegenüber der Gebrauchsstellung (5.1) um die Achse (A) nach vorne geschwenkt ist,**dadurch gekennzeichnet, dass** in wenigstens einer Winkellage des zweiten Strukturteils (6) relativ zu dem ersten Strukturteil (4) ein Federelement (100, 100.1, 200) das erste Beschlagteil (11) und das zweite Beschlagteil (12) in radialer Richtung gegeneinander verspannt, und in wenigstens einer weiteren Winkellage des zweiten Strukturteils (6) relativ zu dem ersten Strukturteil (4) das Federelement (100, 100.1, 200) ohne Wirkung auf den Beschlag (10) ist, wobei das Federelement (100, 100.1, 200) in der Gebrauchsstellung (5.1) ohne Wirkung auf den Beschlag (10) ist, und das Federelement (100, 100.1, 200) in der Nichtgebrauchsstellung (5.4) das erste Beschlagteil (11) und das zweite Beschlagteil (12) in radialer Richtung gegeneinander verspannt.

2. Fahrzeugsitz (1, 51) nach Anspruch 1, **dadurch gekennzeichnet, dass** das erste Beschlagteil (11) mittels eines Adapters (20) mit der Sitzteil-Struktur (4) verbunden ist.

3. Fahrzeugsitz (1, 51) nach Anspruch 1 oder 2, **dadurch gekennzeichnet, dass** das zweite Beschlagteil (12) mittels eines Adapters (30) mit der Rückenlehnen-Struktur (6) verbunden ist.

4. Fahrzeugsitz (1, 51) nach einem der vorstehenden Ansprüche, **dadurch gekennzeichnet, dass** die Rückenlehne (5) in der Nichtgebrauchsstellung (5.4) in eine weitgehend horizontale Stellung geschwenkt ist.

5. Fahrzeugsitz (1, 51) nach einem der vorstehenden Ansprüche, **dadurch gekennzeichnet, dass** das Federelement (100, 100.1, 200) an einem der beiden Beschlagteile (11, 12) in radialer Richtung abgestützt ist, und ortsfest zu diesem einen der beiden Beschlagteile (11, 12) befestigt ist, und ein Finger (32) das Federelement (100, 100.1, 200) in der wenigstens einen Winkellage des zweiten Strukturteils (6) relativ zu dem ersten Strukturteil (4) in radialer Richtung verspannt.

6. Fahrzeugsitz (1, 51) nach Anspruch 5, **dadurch gekennzeichnet, dass** der Finger (32) mit dem anderen der beiden Beschlagteile (11, 12) um die Achse (A) mitschwenkt.

7. Fahrzeugsitz (1, 51) nach Anspruch 5 oder 6, **dadurch gekennzeichnet, dass** eine radial nach innen weisende Innenfläche des Fingers (32) in Umfangsrichtung mit einem Radius (R) um die Lehnenschwenkachse (A) gekrümmt ist.

8. Fahrzeugsitz (1, 51) nach einem der Ansprüche 5 bis 7, **dadurch gekennzeichnet, dass** der Finger (32) an einer Rückenlehnenstruktur (6) oder einem mit der Rückenlehnenstruktur (6) verbundenen Adapter (30) befestigt ist.

9. Fahrzeugsitz (1, 51) nach einem der Ansprüche 5 bis 8, **dadurch gekennzeichnet, dass** der Finger (32) beim Einnehmen wenigstens einer Winkellage auf einen Flansch (103, 204) des Federelements (100, 100.1, 200) aufläuft.

10. Fahrzeugsitz (1, 51) nach Anspruch 9, **dadurch gekennzeichnet, dass** der Flansch (103, 204) mindestens einen Flanschabschnitt (103.1, 103.2, 103.3, 103.4, 204. 2, 204.3, 204.4, 204.5) aufweist, der radial weiter außen angeordnet ist, als eine radial nach innen weisende Fläche des Fingers (32).

11. Fahrzeugsitz (1, 51) nach einem der vorstehenden Ansprüche, **dadurch gekennzeichnet, dass** das Federelement (100, 100.1, 200) in Umfangsrichtung keilförmig ausgebildet ist.

12. Fahrzeugsitz (1, 51) nach einem der vorstehenden Ansprüche, **dadurch gekennzeichnet, dass** das Federelement (100, 100.1, 200) eine in Umfangsrichtung keilförmig verlaufende Anlaufschräge (102) aufweist.

## Claims

1. Vehicle seat (1, 51), in particular motor vehicle seat, having a first structural part (4), a second structural part (6) and at least one lockable and unlockable fitting (10), the fitting (10) having a first fitting part (11), which is connected at least indirectly to the first structural part (4), and a second fitting part (12), which is connected at least indirectly to the second structural part (6), wherein, when the fitting (10) is unlocked, an angular position of the second structural part (6) relative to the first structural part (4) is variable about an axis (A), wherein the first structural part is a seat part structure (4) of a seat part (3) and the second structural part is a backrest structure (6) of a backrest (5), and the vehicle seat (1, 51) can take up a use position (5.1), which is suitable for the transport of passengers and in which the backrest (5) is substantially upright, and can take up a non-use position (5.4), in which the backrest (5) is pivoted forwards about the axis (A) in relation to the use position (5.1), **characterized in that**, in at least one angular position of the second structural part (6) relative to the first structural part (4), a spring element (100, 100.1, 200) braces the first fitting part (11) and the second fitting part (12) with respect to each other in the radial direction, and, in at least one further angular position of the second structural part (6) relative to the first structural part (4), the spring element (100, 100.1, 200) has no effect on the fitting (10), wherein, in the use position (5.1), the spring element (100, 100.1, 200) has no effect on the fitting (10), and, in the non-use position (5.4), the spring element (100, 100.1, 200) braces the first fitting part (11) and the second fitting part (12) with respect to each other in the radial direction.

2. Vehicle seat (1, 51) according to Claim 1, **characterized in that** the first fitting part (11) is connected to the seat part structure (4) by an adapter (20) .

3. Vehicle seat (1, 51) according to Claim 1 or 2, **characterized in that** the second fitting part (12) is connected to the backrest structure (6) by an adapter (30).

4. Vehicle seat (1, 51) according to one of the preceding claims, **characterized in that**, in the non-use position (5.4), the backrest (5) is pivoted into a substantially horizontal position.

5. Vehicle seat (1, 51) according to one of the preceding claims, **characterized in that** the spring element (100, 100.1, 200) is supported in the radial direction on one of the two fitting parts (11, 12) and is fastened in a fixed position with respect to said one of the two fitting parts (11, 12), and a finger (32) braces the spring element (100, 100.1, 200) in the at least one angular position of the second structural part (6) relative to the first structural part (4) in the radial direction.

6. Vehicle seat (1, 51) according to Claim 5, **characterized in that** the finger (32) pivots with the other of the two fitting parts (11, 12) about the axis (A).

7. Vehicle seat (1, 51) according to Claim 5 or 6, **characterized in that** a radially inwardly facing inner surface of the finger (32) is curved in the peripheral direction with a radius (R) about the backrest pivot axis (A).

8. Vehicle seat (1, 51) according to one of Claims 5 to 7, **characterized in that** the finger (32) is fastened to a backrest structure (6) or to an adapter (30) connected to the backrest structure (6).

9. Vehicle seat (1, 51) according to one of Claims 5 to 8, **characterized in that** the finger (32), as it takes up at least one angular position, runs onto a flange (103, 204) of the spring element (100, 100.1, 200).

10. Vehicle seat (1, 51) according to Claim 9, **characterized in that** the flange (103, 204) has at least one flange portion (103.1, 103.2, 103.3, 103.4, 204.2, 204.3, 204.4, 204.5) which is arranged radially further outwards than a radially inwardly facing surface of the finger (32).

11. Vehicle seat (1, 51) according to one of the preceding claims, **characterized in that** the spring element (100, 100.1, 200) is wedge-shaped in the peripheral direction.

12. Vehicle seat (1, 51) according to one of the preceding claims, **characterized in that** the spring element (100, 100.1, 200) has a lead-in chamfer (102) running in a wedge-shaped manner in the peripheral direction.

## Revendications

1. Siège de véhicule (1, 51), en particulier siège de véhicule automobile, comportant une première partie structurale (4), une deuxième partie structurale (6) et au moins une ferrure (10) pouvant être verrouillée et pouvant être déverrouillée, la ferrure (10) comprenant une première partie de ferrure (11), qui est reliée au moins indirectement à la première partie structurale (4), et une deuxième partie de ferrure (12), qui est reliée au moins indirectement à la deuxième partie structurale (6), une position angulaire de la deuxième partie structurale (6) par rapport à la première partie structurale (4) autour d'un axe (A) pouvant être modifiée lorsque la ferrure (10) est déverrouillée, la première partie structurale étant une structure (4) d'une partie d'assise (3), et la deuxième partie structurale étant une structure (6) d'un dossier (5) et le siège de véhicule (1, 51) pouvant adopter une position d'utilisation (5.1) appropriée au transport des personnes, dans laquelle le dossier (5) est vertical dans une large mesure, et pouvant adopter une position de non utilisation (5.4), dans laquelle le dossier (5) est pivoté autour de l'axe (A) vers l'avant par rapport à la position d'utilisation (5.1), **caractérisé en ce que**, dans au moins une position angulaire de la deuxième partie structurale (6) par rapport à la première partie structurale (4), un élément ressort (100, 100.1, 200) serre la première partie de ferrure (11) et la deuxième partie de ferrure (12) l'une contre l'autre dans la direction radiale, et, dans au moins une autre position angulaire de la deuxième partie structurale (6) par rapport à la première partie structurale (4), l'élément ressort (100, 100.1, 200) n'exerce aucune action sur la ferrure (10), l'élément ressort (100, 100.1, 200) n'exerçant aucune action sur la ferrure (10) dans la position d'utilisation (5.1), et l'élément ressort (100, 100.1, 200) serrant la première partie de ferrure (11) et la deuxième partie de ferrure (12) l'une contre l'autre dans la direction radiale dans la position de non utilisation (5.4) .

2. Siège de véhicule (1, 51) selon la revendication 1, **caractérisé en ce que** la première partie de ferrure (11) est reliée à la structure de partie d'assise (4) au moyen d'un adaptateur (20).

3. Siège de véhicule (1, 51) selon la revendication 1 ou 2, **caractérisé en ce que** la deuxième partie de ferrure (12) est reliée à la structure de partie de dossier (6) au moyen d'un adaptateur (30).

4. Siège de véhicule (1, 51) selon l'une des revendications précédentes, **caractérisé en ce que**, dans la position de non utilisation (5.4), le dossier (5) est pivoté dans une position horizontale dans une large mesure.

5. Siège de véhicule (1, 51) selon l'une des revendications précédentes, **caractérisé en ce que** l'élément ressort (100, 100.1, 200) est supporté dans la direction radiale sur l'une des deux parties de ferrure (11, 12), et est fixé à demeure par rapport à cette une des deux parties de ferrure (11, 12), et un doigt (32) serre l'élément ressort (100, 100.1, 200) dans la direction radiale dans l'au moins une position angulaire de la deuxième partie structurale (6) par rapport à la première partie structurale (4).

6. Siège de véhicule (1, 51) selon la revendication 5, **caractérisé en ce que** le doigt (32) pivote autour de l'axe (A) conjointement avec l'autre des deux parties de ferrure (11, 12).

7. Siège de véhicule (1, 51) selon la revendication 5 ou 6, **caractérisé en ce qu'**une surface intérieure, tournée radialement vers l'intérieur, du doigt (32) est incurvée dans la direction périphérique avec un rayon (R) autour de l'axe de pivotement de dossier (A) .

8. Siège de véhicule (1, 51) selon l'une des revendications 5 à 7, **caractérisé en ce que** le doigt (32) est fixé à une structure de dossier (6) ou à un adaptateur (30) relié à la structure de dossier (6).

9. Siège de véhicule (1, 51) selon l'une des revendications 5 à 8, **caractérisé en ce que**, lorsqu'il adopte au moins une position angulaire, le doigt (32) vient en contact avec une bride (103, 204) de l'élément ressort (100, 100.1, 200).

10. Siège de véhicule (1, 51) selon la revendication 9, **caractérisé en ce que** la bride (103, 204) comprend au moins une portion de bride (103.1, 103.2, 103.3, 103.4, 204.2, 204.3, 204.4, 204.5) qui est disposée plus à l'extérieur radialement qu'une surface du doigt (32) qui est orientée radialement vers l'intérieur.

11. Siège de véhicule (1, 51) selon l'une des revendications précédentes, **caractérisé en ce que** l'élément ressort (100, 100.1, 200) est réalisé de manière cunéiforme dans la direction périphérique.

12. Siège de véhicule (1, 51) selon l'une des revendications précédentes, **caractérisé en ce que** l'élément ressort (100, 100.1, 200) comprend un biseau d'entrée (102) s'étendant de manière cunéiforme dans la direction périphérique.
